# EUROPEAN PATENT APPLICATION

(11) **EP 2 135 703 A1**
(43) Date of publication of application: **23.12.2009**
(21) Application number: 08739576.0
(22) Date of filing: 01.04.2008
(51) Int. Cl.: B23K 26/06, B23K 26/00, B23K 26/08, B23K 26/14, G21C 19/02

(54) **LASER PROCESSING APPARATUS AND LASER PROCESSING METHOD**

(30) Priority: 02.04.2007 JP 2007096356
(71) Applicant: Kabushiki Kaisha Toshiba, Minato-ku Tokyo 105-8001 (JP)
(72) Inventor: MUKAI, Naruhiko, Minato-ku Tokyo 105-8001 (JP); KONO, Wataru, Minato-ku Tokyo 105-8001 (JP); OCHIAI, Makoto, Minato-ku Tokyo 105-8001 (JP); SATO, Katsuhiko, Minato-ku Tokyo 105-8001 (JP); SUEZONO, Nobuichi, Minato-ku Tokyo 105-8001 (JP)
(74) Representative: HOFFMANN EITLE
(86) International application number: PCT/JP2008/056463
(87) International publication number: WO 2008/123519

(57) **Abstract**

A laser processing apparatus according to the present invention includes a laser oscillator that emits a continuous-wave or pulsed-wave laser beam for heat processing or a pulsed-wave laser beam for surface treatment, an incident optical system that causes the laser beam emitted from the laser oscillator to enter an optical fiber, a condenser lens that condenses the laser beam emitted from the optical fiber, and a processing unit that moves close to a processing object by carrying the condenser lens and irradiates a surface of the processing object with a laser beam, in which the laser oscillator emits the laser beam for the heat processing when performing the heat processing and emits the laser beam for the surface treatment when performing a pre-treatment or a post-treatment for the heat processing.

## Description

### Technical Field

The present invention relates to a laser processing apparatus and laser processing method which process metal by irradiating the metal with a laser beam and, more particularly, to a laser processing apparatus and laser processing method which performs thermal processing such as laser welding.

### Background Art

In conventional laser welding, laser hardening, or other thermal processing using laser, surfaces of material to be processed are subjected to cleaning, grinding, and/ or coloring in advance to make surface conditions of the material suitable for laser processing.

When performing welding to a metal material, if the metal material is covered with rust or the like, generally surfaces of the metal material are ground on a grinding machine to give a metallic luster to the surfaces before the metal material is welded by irradiation with a laser beam. If the metal to be welded has a composition high in reflectivity for the laser beam, laser heat processing is often performed after increasing laser beam absorption. To increase the laser beam absorption, an electrode surface of the object material is treated with a chemical such as a black oxide or coated with a coloring agent such as a paint. When laser heat processing is completed, the processed surfaces need to be checked for cracks or other defects using penetrant inspection or ultrasonic inspection.

Further, as a result of welding, on surfaces of the control material, tensile stress is generally produced in a surface layer near weld zones due to cycles of thermal expansion and thermal shrinkage, reducing strength of the material. Besides, for example, if the welded object material is used in a hot underwater environment for a long period of time, it is highly likely that stress corrosion cracking will occur due to the tensile stress on the surfaces. To avoid this matter, post-treatment is needed after the welding process to return stress state of the material surfaces from tensile to compressive. For this purpose, the post-treatment such as a mechanical grinding or shot peening process is performed for stress improvement. Aside from giving mechanical strength, welded surfaces may typically be covered with an oxide film or the like, and when surfaces with a metallic luster are required, the welded surfaces are sometimes ground with abrasive material.

For laser welding, a series of steps including various pretreatments, post-treatments, and inspections are performed, generally using tools suitable for respective steps.

Laser welding is often used to join typical metal parts and so on at factory manufacturing sites and the like. A laser beam for laser processing can be transmitted through an optical fiber. Besides, since laser processing is performed in a contactless manner, a laser gun is not subject to a significant reaction force during the processing. Therefore, the laser processing is suitable for remotely performing weld repairs of structures inaccessible to humans or remotely heat-treating surfaces of the structures by applying heat. For example, when cracks occur in a structure in a nuclear reactor of a nuclear power plant due to stress corrosion cracking, the cracked surface is melted by laser to seal the cracks to thereby prevent the stress corrosion cracking from spreading. Besides, cleaning is performed as a pre-treatment before the welding and laser peening is performed as a post-treatment to improve the surface tensile stress occurring after the welding (refer to Patent Document 1: Japanese Patent Laid-Open Publication No. 2003-53533).

The laser processing is often used when an object to be heat-processed (processing object or object to be processed) is located in a radiation environment or in a narrow place. Cleaning, surface treatment, and the like need to be performed before and after the laser processing, and dedicated devices are used respectively for a series of steps including pre-treatment, heat processing, post-treatment, and inspection. These steps are carried out remotely, and a great deal of time and effort is required to replace and install devices at processing sites. Furthermore, as many remote processing devices are required as there are treatment steps, resulting in increases in quantity of materials and processing costs.

### Disclosure of the Invention

The present invention has been made in view of the above problems and an object thereof is to provide a laser processing apparatus and laser processing method which can carry out the steps of surface treatment and heat processing processes without replacing a processing unit.

A laser processing apparatus according to the present invention comprises: a laser oscillator that emits a continuous-wave or pulsed-wave laser beam for heat processing or a pulsed-wave laser beam for surface treatment; an incident optical system that causes the laser beam emitted from the laser oscillator to enter an optical fiber; a condenser lens that condenses the laser beam emitted from the optical fiber; and a processing unit that moves the condenser lens close to a processing object and irradiates a surface of the processing object with a laser beam, wherein the laser oscillator emits the laser beam for the heat processing when performing the heat processing and emits the laser beam for the surface treatment when performing a pre-treatment or a post-treatment for the heat processing.

A laser processing method according to the present invention comprises: a laser oscillation step of emitting a continuous-wave or pulsed-wave laser beam for heat processing when performing heat processing and emitting a pulsed, wave laser beam for surface treatment when performing a pre-treatment or a post-treatment for the heat processing; an incident step of causing the laser beam emitted in the laser oscillation step to enter an optical fiber; a condensing step of condensing the laser beam emitted from the optical fiber; and a processing step of moving a condenser lens close to a processing object and irradiating a surface of the processing object with a laser beam.

According to the laser processing apparatus and the laser processing method of the present invention, the surface treatment and the heat processing processes can be performed without replacing a processing unit.

### Brief Description of the Drawings

Fig. 1 is an overall conceptual diagram showing a first embodiment of a laser processing apparatus according to the present invention.
Fig. 2 is a diagram showing an internal configuration of a condenser lens of the laser processing apparatus according to the first embodiment as well as a laser beam path used during surface treatment.
Fig. 3 is a diagram showing an internal configuration of the condenser lens of the laser processing apparatus according to the first embodiment as well as a laser beam path used during heat processing.
Fig. 4 is a diagram showing an internal configuration of the condenser lens of the laser processing apparatus according to the first embodiment as well as a laser beam path used during a peening process or oxide film-formation process.
Fig. 5 is an overall conceptual diagram showing a second embodiment of a laser processing apparatus according to the present invention.
Fig. 6 is a diagram showing an internal configuration of a condenser lens of the laser processing apparatus according to the second embodiment as well as a laser beam path used during surface treatment.
Fig. 7 is a diagram showing an internal configuration of the condenser lens of the laser processing apparatus according to the second embodiment as well as a laser beam path used during heat processing.
Fig. 8 is a diagram showing an internal configuration of the condenser lens of the laser processing apparatus according to the second embodiment as well as a laser beam path used during inspection and surface treatment.

### Best Mode for Carrying Out the Invention

Embodiments of a laser processing apparatus and a laser processing method according to the present invention will be described hereunder in detail with reference to the accompanying drawings.

### [First Embodiment]

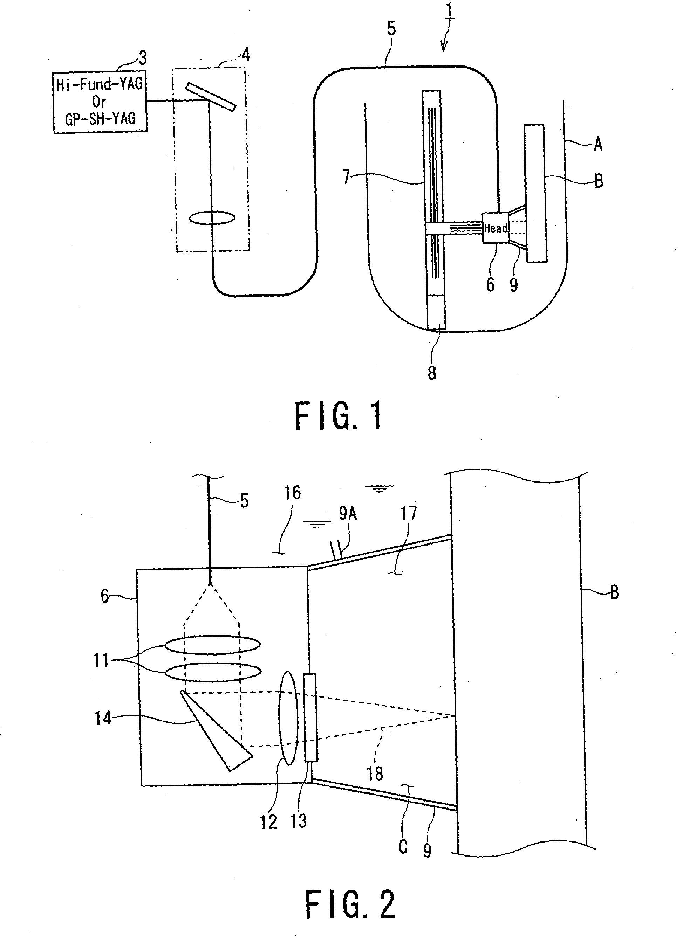

A first embodiment of a laser processing apparatus according to the present invention will be described with reference to Fig. 1 to 4. In the first embodiment, description will be given of an example in which remedial maintenance is carried out in a nuclear reactor of a nuclear power plant using laser welding.

Fig. 1 is an overall conceptual diagram showing the laser processing apparatus 1 according to the first embodiment. During a periodic inspection, a nuclear reactor pressure vessel A in a nuclear power plant has a top opened, allowing access to the interior. Various equipments are installed in the nuclear reactor pressure vessel A, and if cracks occur in the internal equipment, welding or other repairs become necessary. Incidentally, Fig. 1 schematically shows a processing object B which needs welding and other repair processes. In the description of the first embodiment, it is assumed that build-up welding is performed on a surface of the processing object B.

A two-mode oscillator 3 which generates two types of laser beams outputs a laser beam for heat processing and a laser beam for surface treatment by switching these laser beams. The two-mode oscillator 3 produces continuous-wave oscillations, for example, with a wavelength of 1.06 µm and an output power of 400 W as an output for heat processing. Further, by switching the outputs, the two-mode oscillator 3 can produce a short-pulse output for surface treatment. In this case, the two-mode oscillator 3 can produce an output, for example, with a pulse width of 10 ns, wavelength of 0.53 µm, pulse energy of 60 mJ, and frequency of 30 PPS. Typical examples of such oscillators for heat processing include a neodymium-YAG laser. The neodymium-YAG laser, when Q-switched, generates short-pulse oscillations for surface treatment. Furthermore, when passed through a non-linear optical crystal, the short-pulse oscillations are converted into a wavelength best suited to surface treatment.

Incidentally, although a neodymium-YAG laser is taken as an example herein, other laser oscillators may be used as well. However, it is preferable to use a laser oscillator which can produce a continuous-wave or long-pulse laser beam for heat processing with an average power of 100 watts or more as well as a short-pulse laser beam for surface treatment with a pulse width of 1 µs or less and pulse energy of 10 mJ or more.

The laser beam emitted from the two-mode oscillator 3 is guided to a step-index optical fiber 5 by an incident optical system 4 made up of a mirror lens and the like. The step-index optical fiber 5 is led into the nuclear reactor pressure vessel A to transmit the laser beam to a condenser lens 6 near the processing object B. Being held by a remote processing unit 7, the condenser lens 6 can be positioned and scanned in such a way as to be able to irradiate a desired area on a surface of the processing object B with the laser beam. The remote processing unit 7 is tentatively fixed to the nuclear reactor pressure vessel A by a fixture 8.

Fig. 2 is a more detailed diagram of the condenser lens 6. A space C sandwiched between the processing object B and condenser lens 6 contains a path of the laser beam and is covered with a covering member 9. The covering member 9 is made of a water-resistant material formed, for example, into a tubular shape. The covering member 9 is placed in complete contact with both the processing object B and condenser lens 6. The space (space C) enclosed by the covering member 9, the processing object B and the condenser lens 6 is normally filled with air 17. The covering member 9 is provided with an inlet 9A for use to pour a liquid into the inner space (space C). Thus, the water 16 is poured from outside to inside (space C) through the inlet 9A. The covering member 9 and the inlet 9A make up a mechanism for switching an atmosphere of the condenser lens 6 between a transparent liquid environment and a transparent gas environment.

The laser beam emitted from a tip end of the optical fiber 5 is collimated by a collimating lens 11. The collimated laser beam is condensed again by an objective lens 12 and focused and directed at the processing object B through a window glass 13. Incidentally, in Fig. 2, the space C is filled with air 17.

A wedge-shaped dichroic mirror 14 is installed between the collimating lens 11 and the objective lens 12 so as to reflect the collimated laser beam substantially at right angles. The wedge-shaped dichroic mirror 14 has a wedge shape which is approximately 5 degrees out of parallel.

The wedge-shaped dichroic mirror 14, which has a dichroic mirror coating on a surface, has the property of totally reflecting light with a wavelength of 0.53 µm and transmitting light with a wavelength of 1.06 µm. The rear surface of the dichroic mirror 14 has a coating which totally reflects light with a wavelength of 1.06 µm. Consequently, the light with a wavelength of 0.53 µm and light with a wavelength of 1.06 µm are reflected by the dichroic mirror 14 at different angles.

Incidentally, a short-pulse laser beam for the surface treatment with a wavelength of 0.53 µm is used in the example of Fig. 2, the laser is directed almost perpendicularly at the surface of the processing object B.

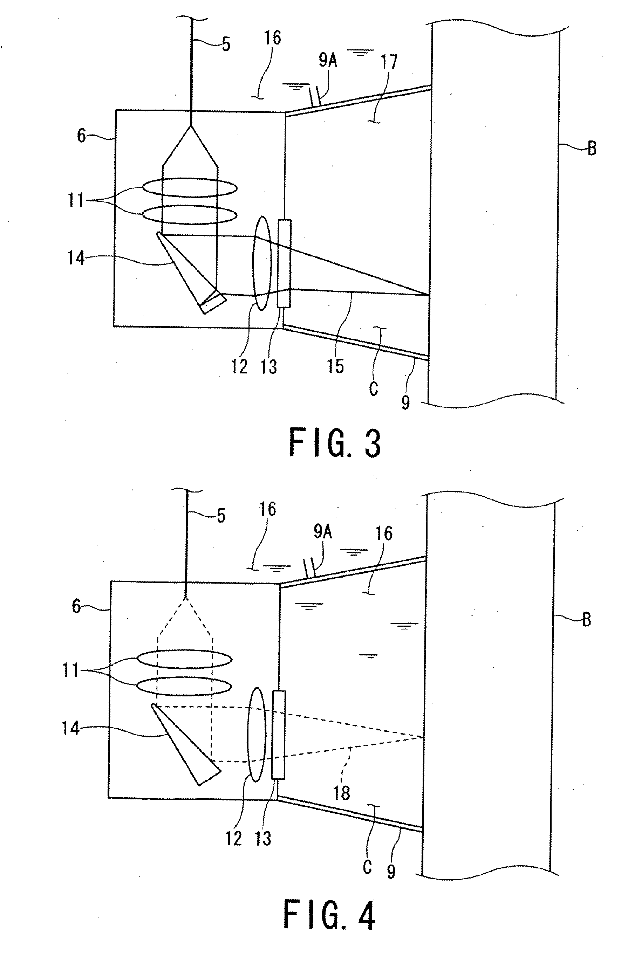

Fig. 3 is a diagram showing an internal configuration of the condenser lens 6 as well as a laser beam path used during the heat processing. During the heat processing, a heat-processing laser beam 15 with a wavelength of 1.06 µm intended for heat processing passes through the condenser lens 6. In this case, the heat-processing laser beam 15 is reflected by the rear surface of the wedge-shaped dichroic mirror 14, and thus is directed at the surface of the processing object B at approximately 10 degrees from the perpendicular direction.

Fig. 4 is a diagram showing an internal configuration of the condenser lens as well as a laser beam path used during a peening process or oxide film-formation process. During a peening process or oxide film-formation process, the space between the condenser lens 6 and the processing object B is filled with water which is a transparent liquid.

Oxides referred to as crud builds up on the surface of the structures in a nuclear reactor with use. Consequently, the laser welding, if performed directly, will entangle the oxides, resulting in poor welds. In view of this matter, the oxides are removed by the pre-treatment before the laser welding.

Thus, the laser processing apparatus 1 removes oxides before the laser welding using the laser beam for surface treatment. That is, the output of the two-mode oscillator 3 of the laser processing apparatus 1 is set to a short-pulse laser beam 18 for the surface treatment. The short-pulse laser beam 18 is led to the surface of the processing object B and converted into shock waves on the surface of the processing object B to blow off the crud. An irradiation point is shifted by appropriately driving the remote processing unit 7 to blow the crud off a desired weld site.

When the ambient atmosphere is a gas, the process described above, when applied, removes the oxides from the surface of the processing object B, revealing a surface with a metallic luster. Such a removal method is often referred to as laser cleaning, and higher the peak power on a light-gathering surface, the larger the effect of laser cleaning. Thus, it is desirable to irradiate an object surface perpendicularly. The short-pulse laser beam 18 hits the surface of the processing object B perpendicularly by being reflected from the surface of the wedge-shaped dichroic mirror 14 as shown in Fig. 2, making it possible to perform a cleaning operation efficiently.

The laser processing apparatus 1 performs cleaning as a pre-treatment before a laser welding operation. For the laser welding operation, the output of the two-mode oscillator 3 is switched to the laser beam for the heat processing. Fig. 3 shows how the surface of the processing object B is laser-welded with the output switched to the heat-processing laser beam 15. According to Fig. 3, in performing the laser processing using the heat-processing laser beam 15, reflection from the processing object B poses a problem because of very high average laser power. That is, when the reflection from the processing object B returns into the condenser lens 6, it is highly likely that the inside of the condenser lens 6 will be thermally damaged.

However, with the laser processing apparatus 1, since the heat-processing laser beam 15 is reflected by the rear surface of the wedge-shaped dichroic mirror 14, the laser is focused obliquely on the processing object B and the reflected light does not return into the condenser lens 6. Consequently, soundness of the condenser lens 6 is maintained. Once a surface is laser cleaned using this configuration, the laser welding can be done on the surface as desired by appropriately controlling the remote processing unit 7.

In a portion of the processing object B which has been laser-welded, generally, high tensile residual stress is set up on material surfaces due to cycles of thermal expansion.and thermal shrinkage. If, for example, the nuclear reactor is operated under the tensile residual stress, it is highly likely that cracks will develop again due to stress corrosion cracking. This makes it necessary to carry out the post-treatment after the laser welding. The post-treatment is carried out with the oscillation output of the two-mode oscillator switched to the short-pulse laser beam 18 for the surface treatment.

For the post-treatment, water is poured into the covering member 9 through the inlet 9A in advance as shown in Fig. 4. Since the space C between the condenser lens 6 and the processing object B is filled with water, the short-pulse laser beam 18 directed at the material surface causes shock waves, which are then intensified greatly by the inertia of the water. This in turn causes local plastic deformation only near the material surface, converting the residual stress state on the surface of the processing object B into compression. This process is known as a laser peening process. The laser peening process can apply compression stress to a desired range by appropriately scanning the remote processing unit 7 for irradiation.

Incidentally, instead of filling the space C with water, a film of water, for example, approximately 0.1 mm in thickness may be formed on the surface of the processing object B by, for example, spraying water onto the processing object B.

When the laser peening process is performed using a liquid, such as water, containing a large number of oxygen atoms, liquid molecules are decomposed at a laser irradiation point, releasing active oxygen. Consequently, a fine oxide film is formed on the processed material surface. It is known that in such a case, stainless steel and inconel lose their metallic luster and present a dull-colored surface. To avoid such defect and maintain the metallic luster, oil, alcohol or the like containing a smaller number of oxygen atoms can be used instead of water.

Furthermore, in the pre-treatment before the laser welding, crud can be removed using a configuration such as shown in Fig. 4. In this case, as described above, after the pre-treatment of cleaning, the surface of the processing object loses its metallic luster and becomes more absorbent of light. This provides the advantage of being able to reduce the laser power required for the laser welding process performed after the pre-treatment or speed up the process.

When repairing a structures in a nuclear reactor by means of laser welding, since the laser processing apparatus 1 and the laser processing method according to the first embodiment can carry out required pre-treatment and post-treatment using the single apparatus, it is not necessary to frequently replace devices as in the conventional structure, thereby greatly reducing a work period.

Besides, the laser processing apparatus 1 and the laser processing method according to the first embodiment of the present invention provide the advantage of reducing base materials inputted in the nuclear reactor to a minimum.

### [Second Embodiment]

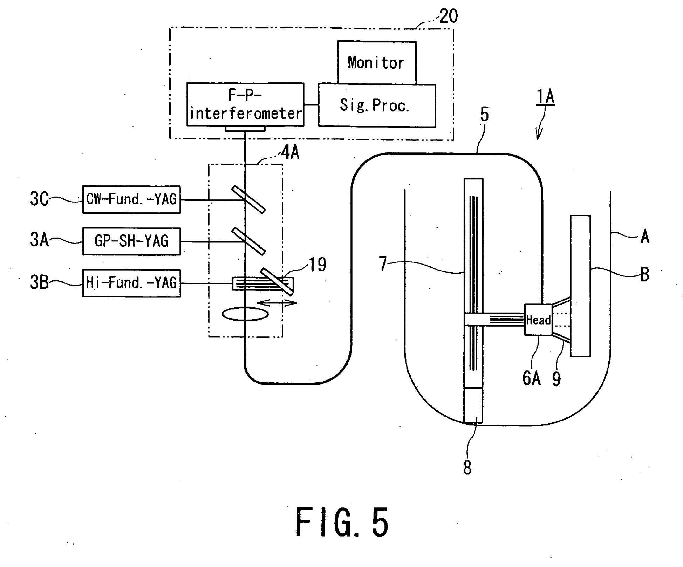

A second embodiment of a laser processing apparatus and a laser processing method according to the present invention will be described hereunder with reference to Figs. 5 to 8. The second embodiment additionally includes a post-welding inspection step in addition to the laser processing apparatus according to the first embodiment. Incidentally, the same components as those in the first embodiment are denoted by the same reference numerals as the corresponding components in the first embodiment, and redundant description thereof will be omitted herein.

Fig. 5 is an overall conceptual diagram showing the laser processing apparatus 1A according to the second embodiment. The nuclear reactor pressure vessel A in the nuclear power plant has a top end opened during a periodic inspection, allowing access to the interior. Various equipments have been installed in the nuclear reactor pressure vessel A, and if cracks are generated in the internal equipment, welding or other repairs become necessary. Incidentally, Fig. 5 schematically shows a processing object B which needs welding and other repair processes. In the description of the second embodiment, it is assumed that a build-up welding is performed on a surface of the processing object B, as in the case of the first embodiment.

Steps needed to be carried out before and after the process operation of the build-up welding include the pre-treatment carried out to prepare the surface of the processing object B for the laser welding, the laser build-up welding, and the subsequent removal of dirt caused by the laser welding or improvement of the surface stress state. Further, a step of checking for post-welding defects is needed depending on the object to be processed. The step is carried out after the laser welding or after the stress improvement procedures.

Generally, a camera-based remote visual inspection, an ultrasonic inspection, a laser-ultrasonic inspection, or other inspection system is used for the purpose of the inspection described above. For this purpose, it is necessary to remove the processing unit and install the inspection system. The laser processing apparatus 1A according to the second embodiment uses a laser-ultrasonic inspection method as the inspection step to make it possible to perform the pre-treatment, the welding, the inspection, and the post-treatment using a single processing unit in addition to the laser processing apparatus 1 according to the first embodiment. However, laser oscillators for the surface treatment and the heat processing have configurations different from the configuration according to the best mode for carrying out the invention.

A surface-treatment laser oscillator 3A, which can output second harmonic light of a Q-switched YAG laser, produces an output with a pulse energy of 100 mJ, frequency of 60 PPS, wavelength of 0.53 µm, and pulse width of 6 ns. A heat-processing laser oscillator 3B, which uses a laser diode-pumped fiber laser, oscillates continuously at a wavelength of 1.06 µm with an output power of 2 kW. An interferometric laser oscillator 3C, which is a continuously-wave laser with a very narrow spectral line width, uses a laser diode-pumped YAG laser with a wavelength of 1.06 µm, output power of 5 W, and spectral line width of 100 kHz.

Laser beams from each of the surface-treatment laser oscillator 3A, heat-processing laser oscillator 3B, and interferometric laser oscillator 3C are respectively guided to the fiber 5 by an incident optical system 4A made up of a mirror, lens and movable mirror 19. The step-index optical fiber 5 is led into the nuclear reactor pressure vessel A so as to transmit the laser beam to a condenser lens 6A near the processing object B. Being held by the remote processing unit 7, the condenser lens 6A can be positioned and scanned in such a way as to be able irradiate a desired area on the surface of the processing object B with a laser beam. The remote processing unit 7 is tentatively fixed to the nuclear reactor pressure vessel B by a fixture 8.

The condenser lens 6A releases various laser beams, of which a laser beam emitted from the interferometric laser oscillator 3C is scatter-reflected by the surface of the processing object B. Part of the scatter reflections goes backward through the condenser lens 6A, the step-index optical fiber 5 and the incident optical system 4A and is guided to an interference analyzer 20 made up of a Fabry-Perot interferometer and a signal processing unit. The interference analyzer 20 monitors surface conditions and irradiation conditions of the processing object B.

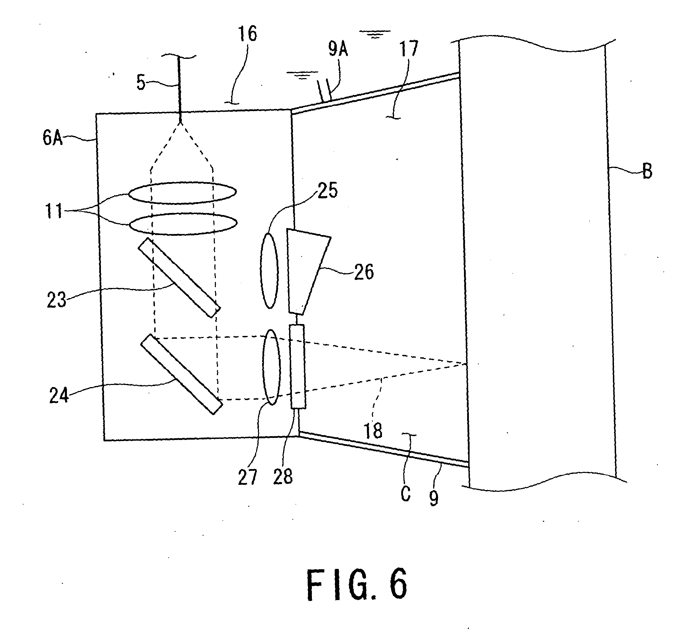

Fig. 6 is a diagram showing an internal configuration of the condenser lens 6A as well as a laser beam path used during the surface treatment. A space C sandwiched between the processing object B and the condenser lens 6A is covered with the covering member 9. The space (space C) enclosed by the covering member 9, the processing object B and the condenser lens 6 is normally filled with air 17. The covering member 9 is provided with an inlet 9A for use to pour a liquid into the inner space (space C). Thus, the water 16 can be poured from outside to inside (space C) through the inlet 9A.

The short-pulse laser beam 18 emitted from the step-index optical fiber 5 is converted into a collimated beam by the collimating lens 11. A dichroic mirror 23 totally reflects light with a wavelength of 1.06 µm and allows light with a wavelength of 0.53 µm to pass. The short-pulse laser beam 18 passing through the dichroic mirror 23 is bent by a total reflection mirror 24, condensed by an objective lens 27 and directed at the processing object through a window glass 28.

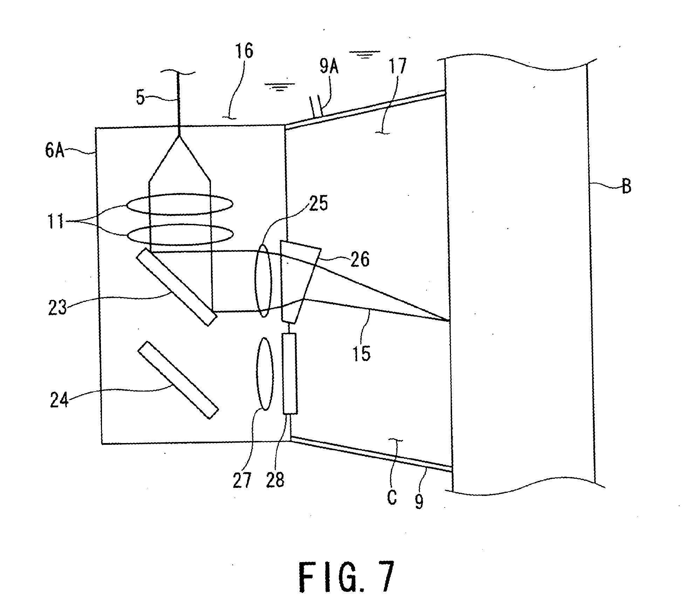

On the other hand, a heat-processing laser beam 15 with a wavelength of 1.06 µm is bent at right angles by the dichroic mirror 23 and focused onto the surface of the processing object B through an objective lens 25 and a wedge window 26 as shown in Fig. 7. Incidentally, in Figs. 6 and 7, the space C between the condenser lens 6A and processing object B is filled with a gas. Besides, the wedge window 26, which serves as a prism, refracts the beam as shown in Fig. 7 so that the 1.06-µm heat-processing laser beam 15 will not hit the processing object B perpendicularly.

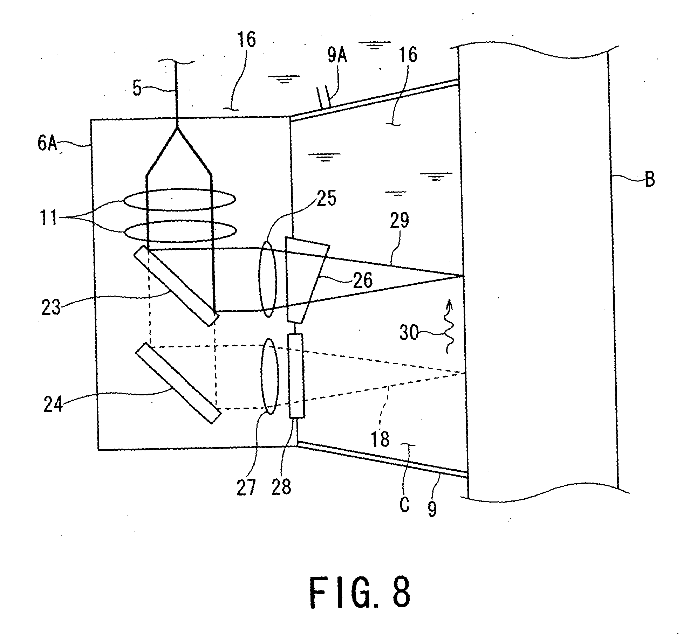

Fig. 8 is a diagram showing an internal configuration of the condenser lens as well as a laser beam path used during the inspection and the surface treatment. During the inspection and the surface treatment, the space C between the condenser lens 6A and the processing object B is filled with a transparent liquid such as water 16. The refractive index of water is 1.33 while the refractive index of the wedge window is 1.33 to 1.46. Since the difference in refractive index between the water and the wedge window is insignificant, light is almost not refracted on a boundary between the wedge window 26 and the water 16. Thus, when the space C is filled with the water, a coherent laser beam 29 is directed almost perpendicularly at the processing object B.

Next, operation of the laser processing apparatus 1A will be described.

The laser processing apparatus 1A repairs the surface of the processing object B by means of laser build-up welding, and the incident optical system 4A is set up, as a pre-treatment, such that the short-pulse laser beam 18 emitted from the surface-treatment laser oscillator 3A will be led to the step-index fiber 5. Specifically, the movable mirror 19 is set so as to be turned away from the optical path.

According to the setting mentioned above, the short-pulse laser beam 18 is led to the condenser lens 6A, collimated by the collimating lens 11, then passes through the dichroic mirror 23, and then is directed to the processing object B passing through a total reflection mirror 24, an objective lens 27 and a window glass 28. Using irradiation with the short-pulse laser beam 18 in this way, it is possible to remove extraneous matter such as crud from the surface of the object material by performing surface removal non-thermally based on an ablation phenomenon to thereby make surface conditions suitable for the laser welding.

Furthermore, if the space C between the condenser lens 6A and the processing object B is filled with transparent oxygen atoms as shown in Fig. 8, a fine oxide film is formed on the surface after irradiation, thus making it possible to perform the subsequent laser welding processing at lower power.

Instead of filling the space C with the transparent oxygen atoms, a film of oxygen atoms, for example, approximately 0.1 mm in thickness may be formed on the surface of the processing object B.

In this way, the laser processing apparatus 1A carries out a pre-treatment before the laser build-up welding to make surface conditions of the processing object B suitable for the laser heat processing. Unlike conventional techniques which require processing units to be replaced after the pre-treatment, the laser processing apparatus 1A can perform the laser build-up welding immediately following the pre-treatment.

In this operation, it is necessary to adjust the output from the adjustments are made by driving the movable mirror 19 so that the heat-processing laser oscillator 3B so as to be guided to the optical fiber 5.
As shown in Fig. 7, the heat-processing laser beam 14 emitted from the optical fiber 5 is collimated by the collimating lens 11 and bent toward the objective lens 25 by the dichroic mirror 23 which reflects the light with a wavelength of 1.06 µm. The heat-processing laser beam 15 condensed by the objective lens 25 is directed at the surface of the processing object B through the wedge window 26 to weld and process the surface. If the heat-processing laser is directed perpendicularly to the object, the light reflected by the object surface returns into the condenser lens 6A. Then, it is highly likely that the inside of the condenser lens 6A will be damaged by extraordinary heat.

For this reason, with the laser processing apparatus 1A, the heat-processing laser beam 14 is refracted and bent by the wedge window 26 and is not directed perpendicularly to the processing object B. In this way, the laser processing apparatus 1A prevents the condenser lens 6A from being broken by the reflection from the processing object B.

After the build-up welding and processing, the post-welding inspection is conducted to verify the post-welding soundness. In a conventional operation step, the welding apparatus is disassembled from the processing object B and an inspection equipment is introduced instead, but it is not necessary for the laser processing apparatus 1A to be replaced with other equipment or device.. That is, in the inspection step performed after the build-up welding described above, by driving the movable mirror 19 in a manner such that the output from the heat-processing laser oscillator will not enter the optical fiber 5, it is possible to cause the output from the surface-treatment laser oscillator 3A and the output from the interferometric laser oscillator 3C to enter the optical fiber 5 simultaneously.

When the short-pulse laser beam 18 and the coherent laser beam 29 are introduced simultaneously into the optical fiber 5, the two beams are emitted from the optical fiber 5 into the condenser lens 6A as well. The two laser beams are collimated by the collimating lens 11 and the coherent laser beam 29 which has a wavelength of 1.06 µm is led to the objective lens 25 by the dichroic mirror 23 and directed at the surface of the processing object B through the wedge window 26. On the other hand, the short-pulse laser beam 18, which has a wavelength of 0.53 µm, passes through the dichroic mirror 23. Then, the short-pulse laser beam 18 is bent by the total reflection mirror 24 toward the objective lens 27 and directed at the surface of the processing object B through the window glass 28.

If the space C between the condenser lens 6A and processing object B is filled with water, the short-pulse laser beam 18 directed at the surface of the processing object B causes large shock waves. The shock waves produce compression stress near the surface of the processing object B. This is known as a laser peening effect, and such post-welding surface treatment is used for maintenance operations of in-core structures in actual nuclear power plants, making it possible to improve the surface characteristics of materials in the post-treatment after the welding processing.

In this operation, the short-pulse laser beam 18 directed at the surface of the processing object B causes large shock waves, which propagate not only in the processing object B, but also along surfaces as surface ultrasonic waves 30. Then; the surface ultrasonic waves 30 propagate also to the surface irradiated with the coherent laser beam 29. Consequently, the coherent laser beam 29 is reflected by being frequency-modulated by the surface ultrasonic waves 30, and the reflected light is emitted backward from an emission port of the optical fiber 5 by following a path opposite the incident path. When the coherent laser beam returns after being modulated by the surface ultrasonic waves, part of the coherent laser beam is introduced into the interference analyzer 20 via the incident optical system 4A. The interference analyzer 20 demodulates the surface ultrasonic waves to allow characteristics of the surface ultrasonic waves to be checked. The surface ultrasonic waves 30 are reflected by any weld defect. Such a weld defect will also cause changes in the ultrasonic waves analyzed by the interference analyzer 20. By detecting such changes, the interference analyzer 20 can verify the post-welding soundness.

The laser processing apparatus 1A and the laser processing method according to the second embodiment of the present invention make it possible to conduct defect inspection after the build-up welding continuously without changing the processing unit and simultaneously carry out the post-treatment for improvement of surface residual stress state after the welding using a laser peening.

Incidentally, although the second embodiment has been described citing an example in which the post-welding inspection and the laser peening are performed simultaneously, the respective processings may be performed independently.

It is to be further noted that some embodiments of the present invention have been described above, but the present invention is not limited to the described embodiments, and many other changes and modifications may be made, even in combinations thereof, without departing from the scopes of the subjects of the present invention.

## Claims

1. A laser processing apparatus comprising:
a laser oscillator that emits a continuous-wave or pulsed-wave laser beam for heat processing or a pulsed-wave laser beam for surface treatment;
an incident optical system that causes the laser beam emitted from the laser oscillator to enter an optical fiber;
a condenser lens that condenses the laser beam emitted from the optical fiber; and
a processing unit that moves the condenser lens close to a processing object and irradiates a surface of the processing object with a laser beam,
wherein the laser oscillator emits the laser beam for the heat processing when performing the heat processing and emits the laser beam for the surface treatment when performing a pre-treatment or a post-treatment for the heat processing.

2. The laser processing apparatus according to claim 1, further comprising an interference analyzing unit installed near an incident surface of the optical fiber, wherein during the pre-treatment or the post-treatment for the heat processing, the laser oscillator emits a continuous-wave coherent laser beam together with the laser beam for the surface treatment; the incident optical system causes the laser beam for the surface treatment or the coherent laser beam to enter the optical fiber; and the interference analyzing unit receives reflected light of the coherent laser beam from the incident surface of the optical fiber, detects an impact wave produced during irradiation with the laser beam for the surface treatment using interference analysis to thereby monitor surface conditions and irradiation conditions of the processing object.

3. The laser processing apparatus according to claim 2, wherein the laser oscillator emits the laser beam for the surface treatment and the coherent laser beam such that the laser beam for the surface treatment and the coherent laser beam will differ in wavelength, the laser processing apparatus further comprising a dichroic mirror installed in the condenser lens to separate wavelengths of the laser beam for the surface treatment and the coherent laser beam so that the laser beam for the surface treatment and the coherent laser beam irradiates the surface of the processing object at different locations.

4. The laser processing apparatus according to claim 2, wherein the laser oscillator emits the coherent laser beam and the laser beam for the heat processing at the same wavelength, the laser processing apparatus further comprising a mechanism for switching an atmosphere of the condenser lens between a transparent liquid environment and a transparent gas environment and also comprising a wedge window provided in a final surface of the condenser lens.

5. A laser processing method comprising:
a laser oscillation step of emitting a continuous-wave or pulsed-wave laser beam for heat processing when performing heat processing and emitting a pulsed-wave laser beam for surface treatment when performing a pre-treatment or a post-treatment for the heat processing;
an incident step of causing the laser beam emitted in the laser oscillation step to enter an optical fiber;
a condensing step of condensing the laser beam emitted from the optical fiber; and
a processing step of moving a condenser lens close to a processing object and irradiating a surface of the processing object with a laser beam.

6. The laser processing method according to claim 5, wherein the laser beam for the heat processing emitted in the laser oscillation step is a continuous wave or pulsed wave with an average power of 100 watts or more and the laser beam for the surface treatment emitted in the laser oscillation step has a pulse width of 1 µs or less and a pulse energy of 10 mJ or more.

7. The laser processing method according to claim 5, wherein during the pre-treatment or the post-treatment for the heat processing, the laser oscillation step emits a continuous-wave coherent laser beam together with the laser beam for the surface treatment, the incident step causes the laser beam for the surface treatment and the coherent laser beam to enter the optical fiber before the processing step performs operation, and an interference analysis is performed to receive, near an incident surface of the optical fiber, a reflected light of the coherent laser beam from the incident surface of the optical fiber, detect an impact wave produced during irradiation with the laser beam for the surface treatment using the interference analysis, to thereby monitor surface conditions and irradiation conditions of the processing object.

8. The laser processing method according to claim 7, wherein the laser beam for the surface treatment emitted in the laser oscillation step is a continuous beam of 10 W or less and the coherent laser beam emitted in the laser oscillation step is a pulsed laser beam with a pulse width of 1 µs or less and a pulse energy of 10 mJ or more.

9. The laser processing method according to claim 5, wherein first, in the pre-treatment for the heat treatment, the laser oscillation step emits the laser beam for the surface treatment followed by the incident step, the condensing step and the processing step, next, in the heat treatment, the laser oscillation step emits the laser beam for the heat treatment followed by the incident step, the condensing step and the processing step, and finally, in the post-treatment for the heat treatment, the laser oscillation step emits the laser beam for the surface treatment followed by the incident step, the condensing step and the processing step.

10. The laser processing method according to claim 5, wherein first, in the pre-treatment for the heat processing, the laser oscillation step emits the laser beam for the surface treatment followed by the incident step, the condensing step and the processing step, next, in the heat processing, the laser oscillation step emits the laser beam for the heat processing followed by the incident step, the condensing step and the processing step, and finally, in the post-treatment for the heat processing, the laser oscillation step emits a continuous-wave coherent laser beam together with the laser beam for surface treatment, and the incident optical step causes the laser beam for the surface treatment and the coherent laser beam to enter the optical fiber before the processing step performs operation, the laser processing method further comprising an interference analysis step of receiving, near an incident surface of the optical fiber, a reflected light of the coherent laser beam from the incident surface of the optical fiber, detecting the impact wave produced during irradiation with the laser beam for the surface treatment using interference analysis to thereby monitor surface conditions and irradiation conditions of the processing object.

11. The laser processing method according to claim 5, further comprising a film formation step of forming a film of transparent liquid on the surface of the processing object in the post-treatment for the heat processing before, or at the same time of, emitting the laser beam for the surface treatment in the laser oscillation step.

12. The laser processing method according to claim 5, further comprising a film formation step of forming a film of transparent oxygen atoms on the surface of the processing object in the pre-treatment for the heat processing before, or at the same time of, emitting the laser beam for the surface treatment in the laser oscillation step.
